# EUROPÄISCHE PATENTANMELDUNG

(11) **EP 4 328 680 A1**
(43) Veröffentlichungstag der Anmeldung: **28.02.2024**
(21) Anmeldenummer: 23190552.2
(22) Anmeldetag: 09.08.2023
(51) Int. Cl.: G05B 19/042, H04L 12/40, B67C 3/00

(54) **VORRICHTUNG UND VERFAHREN ZUM INSPIZIEREN VON BEHÄLTNISSEN**

(30) Priorität: 17.08.2022 DE 102022120823
(71) Anmelder: Krones AG, 93073 Neutraubling (DE)
(72) Erfinder: Niedermeier, Anton, 93073 Neutraubling (DE); Will, Christof, 93073 Neutraubling (DE); Piana, Stefan, 93073 Neutraubling (DE); Klinger, Reinhard, 93073 Neutraubling (DE)
(74) Vertreter: Bittner, Bernhard

(57) **Zusammenfassung**

Vorrichtung (1) zum Behandeln und insbesondere Inspizieren von Behältnissen (10) und insbesondere Getränkebehältnissen mit einer Transporteinrichtung (2), welche dazu geeignet ist, die Behältnisse (10) entlang eines vorgegebenen Transportpfads (P) zu transportieren, mit einer ersten Sensoreinrichtung (2), welche dazu geeignet und bestimmt ist, wenigstens einen für die transportierten Behältnisse (10) charakteristischen Wert zu erfassen, mit einer ersten Aktoreinrichtung (4), welche entlang des Transportpfads (P) nach der ersten Sensoreinrichtung (2) angeordnet ist und welche dazu geeignet ist, auf ein transportiertes Behältnis (10) einzuwirken und mit einer von der Sensoreinrichtung (2) und der Aktoreinrichtung (4) beabstandete Steuerungseinrichtung (6), welche dazu geeignet und bestimmt ist, die erste Aktoreinrichtung (4) unter Berücksichtigung wenigstens eines von der ersten Sensoreinrichtung (2) in Abhängigkeit von dem charakteristischen Wert ausgegebenen Signals zu steuern, dadurch gekennzeichnet, dass die erste Sensoreinrichtung (2) und die erste Aktoreinrichtung (4) mittels eines echtzeitfähigen Feldbusses (12) mit der Steuerungseinrichtung (6) über eine Kabelverbindung (14) in Kommunikationsverbindung steht und die erste Sensoreinrichtung (2) dazu geeignet ist Messdaten in Echtzeit auszugeben und die Kommunikation zwischen der ersten Sensoreinrichtung (2) und der Steuerungseinrichtung (6) und/oder der Steuerungseinrichtung (6) und der ersten Aktoreinrichtung (4) in Echtzeit erfolgt.

## Beschreibung

Die vorliegende Erfindung bezieht sich auf eine Vorrichtung und ein Verfahren zum Behandeln und insbesondere Inspizieren von Behältnissen und insbesondere von Getränkebehältnissen.

Aus der Getränkeherstellung ist es bekannt, befüllte, befüllte und verschlossene Behältnisse oder auch zu befüllende Behältnisse auf unterschiedliche Aspekte hin zu untersuchen bzw. zu inspizieren. So ist es beispielsweise bekannt, die Mündungen derartiger Behältnisse dahingehend zu inspizieren, ob diese mit Verschlüssen versehen werden können oder ob diese Fehler aufweisen. Auch sind Füllhöheninspektionen bekannt, welche prüfen, ob ein bestimmtes Behältnis ordnungsgemäß bzw. mit einer gewünschten oder Sollmenge an Flüssigkeit befüllt wurde. Daneben sind auch Inspektionseinrichtungen bekannt, welche die Etiketten derartiger Behältnisse inspizieren.

In jüngerer Zeit setzen derartige Inspektionseinrichtungen oftmals Kameras ein, welche daher mit einer hohen Datenmenge einhergehen. Weiterhin werden auch die Arbeitsgeschwindigkeiten derartiger Maschinen kontinuierlich größer, was auch hier die Anforderungen an derartige Inspektionssysteme erhöht.

Des Weiteren sind aus dem internen Stand der Technik der Anmelderin solche Systeme bekannt, die ähnlich einem Inspektionssystem aufgebaut sind, aber als Funktion nicht eine Qualitätsbewertung von produzierten Objekten durchführen, sondern als Sensorik für die Steuerung oder Regelung der Behandlungsmaschine dienen. Dies kann z.B. die Erfassung der Lage (Position, Drehwinkel, Verkippung etc.) für eine Lageregelung sein oder die lagegerechte Triggerung von Manipulationsschritten.

Weiterhin ist es bekannt, dass derartige Inspektionseinrichtungen auch eine Ausleitung beispielsweise als fehlerhaft erkannter Behältnisse ermöglichen. Auch derartige Ausschleuseeinrichtungen wie insbesondere Aktoren müssen dabei schnell reagieren und auch teilweise mit hohen Datenmengen umgehen können.

Aus dem Stand der Technik sind diverse Sensorsysteme für derartige Vorrichtungen bekannt. So sind beispielsweise einfache digital schaltende oder auch analog messende Sensoren bekannt, welche einen Ein-Kabel-Anschluss aufweisen. Dabei ist es bekannt, dass eine Spannungsversorgung, bei der es sich meist um eine 24-Volt-Versorgung handelt und auch eine Signalleitung in ein Kabel integriert ist.

Daneben sind auch einfache digital schaltende oder analog messende Sensoren bekannt, welche über IO-Link-Schnittstellen angebunden sind. Diese sind teilweise auch dazu in der Lage, komplexe Daten mit einem übergeordneten Rechner auszutauschen. Diese Vorrichtungen haben jedoch des Öfteren das Problem der Echtzeitfähigkeit insbesondere bei der Kommunikation mit mehreren Teilnehmern.

Bekannt sind weiterhin Bildaufnahmeeinrichtungen, wie beispielsweise Kameras mit einem - Ein-Kabel-Anschluss. Dies kann beispielsweise über Gigabit-Ethernet oder ein Power-over-Ethernet (PoE) angebunden sein. Allerdings erlauben derartige Gigabit Ethernet Verbindungen nicht in jedem Fall eine Echtzeitverbindung.

Aus der EP 3 286 552 ist eine Beleuchtung für eine Bildverarbeitung bekannt, welche präzise mittels eines Feldbusses arbeitet.

Daneben sind auch präzise und insbesondere in Echtzeit triggerbare Bildaufnahmeeinrichtungen und insbesondere Smartkameras bekannt. Diese geben in Echtzeit verarbeitete Ergebnisse zurück und bevorzugt auch ok oder nicht ok Klassifikationen aus der Bildverarbeitung.

Die beschriebenen Vorgehensweisen weisen jedoch jeweils unterschiedliche Nachteile auf. Teilweise erlauben diese Anordnungen zwar eine Erfassung beispielsweise Bildaufnahme jedoch keine Reaktion hierauf. Bei anderen Lösungen werden lediglich Sensordaten geliefert. Andere Lösungen liefern vergleichsweise komplexe Sensordaten. Schließlich tritt des Öfteren noch das Problem auf, dass die Geräte nicht in Echtzeit kommunizieren. Damit sind die aus dem Stand der Technik genannten Vorgehensweisen nicht dazu in der Lage einerseits eine schnelle bzw. echtzeitfähige Kommunikation zu erlauben, und andererseits eine kostengünstige und einfache Auslegung bzw. Verkabelung auch bei der Ausgabe komplexer Daten.

Der vorliegenden Erfindung liegt daher die Aufgabe zugrunde, eine derartige Vorrichtung und ein Verfahren zum Behandeln und insbesondere Inspizieren von Behältnissen zur Verfügung zu stellen, welches einerseits kostengünstig ist, andererseits eine sehr schnelle und insbesondere echtzeitfähige Kommunikation erlaubt und schließlich auch die Verarbeitung und Übertragung komplexer Datenmenge oder Datenströme erlaubt, insbesondere wenn eine Vielzahl von Sensor- und/oder Aktoreinrichtungen vorgesehen ist.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Behandeln und insbesondere Inspizieren von Behältnissen und insbesondere Getränkebehältnissen weist eine Transporteinrichtung auf, welche dazu geeignet und bestimmt ist, die Behältnisse entlang eines vorgegebenen Transportpfads zu transportieren. Weiterhin weist die Vorrichtung eine erste Sensoreinrichtung auf, welche insbesondere entlang dieses Transportpfads angeordnet ist und welche dazu geeignet und bestimmt ist, wenigstens einen für die transportierten Behältnisse charakteristischen Wert und insbesondere charakteristischen physikalischen Wert zu erfassen. Bevorzugt ist die Sensoreinrichtung dazu geeignet und bestimmt, für jedes einzelne der transportierten Behältnisse den genannten Wert zu erfassen. Bevorzugt ist die Sensoreinrichtung dazu geeignet und bestimmt, den genannten Wert berührungslos und/oder optisch zu erfassen.

Weiterhin weist die Vorrichtung eine erste Aktoreinrichtung auf, welche entlang des Transportpfads typischerweise nach der ersten Sensoreinrichtung angeordnet ist und welche dazu geeignet und bestimmt ist, auf ein bestimmtes transportiertes Behältnis (insbesondere mechanisch) einzuwirken (und insbesondere dieses aus dem Transportpfad auszuschleusen).

Weiterhin ist eine von der ersten Sensoreinrichtung und/oder der ersten Aktoreinrichtung beabstandete Steuerungseinrichtung vorgesehen, welche dazu geeignet und bestimmt ist, die erste Aktoreinrichtung unter Berücksichtigung wenigstens eines von der ersten Sensoreinrichtung in Abhängigkeit von dem charakteristischen Wert und/oder in Abhängigkeit eines von dem (durch die erste Sensoreinrichtung erfassten) charakteristischen Wert ausgegebenen Signals zu steuern.

Erfindungsgemäß stehen die erste Sensoreinrichtung und die erste Aktoreinrichtung mittels wenigstens eines echtzeitfähigen Feldbusses mit der Steuerungseinrichtung über eine Kabelverbindung in Kommunikationsverbindung und die erste Sensoreinrichtung ist dazu geeignet, Messdaten in Echtzeit auszugeben und die Kommunikation zwischen der ersten Sensoreinrichtung und der Steuerungseinrichtung und/oder der Steuerungseinrichtung und der ersten Aktoreinrichtung erfolgt bzw. erfolgen in Echtzeit.

Es wird daher im Rahmen der Erfindung eine Datenkommunikation über einen Feldbus und insbesondere einen Echtzeitfeldbus vorgeschlagen, der eine Echtzeitkommunikation insbesondere mit sehr hohem Determinismus erlaubt. Insbesondere wird eine Datenkommunikation in harter Echtzeit ermöglicht.

Auch die Sensoreinrichtung ist zur Ausgabe von Daten in Echtzeit geeignet und bestimmt.

Unter Echtzeit wird insbesondere verstanden, dass die Sensoreinrichtung oder andere Einrichtungen Daten liefern und/oder kommunizieren, wobei dieser Zeitraum bzw. diese Reaktionszeit erheblich geringer ist als 1 Sekunde, bevorzugt erheblich geringer als 0,1 Sekunden, bevorzugt geringer als 0,05 Sekunden, bevorzugt geringer als 0,01 Sekunden, bevorzugt geringer als 0,005 Sekunden und besonders bevorzugt geringer als 0,001 Sekunde.

Bevorzugt handelt es sich bei den ausgegebenen Daten um zyklisch ausgegebene und/oder zyklisch erfasste Daten. So kann beispielsweise für jedes der transportierten Behältnisse ein entsprechender Datensatz oder können entsprechende Daten ausgegeben werden. Weiterhin kann bevorzugt auch für jedes einzelne Behältnis entschieden werden, ob dieses aus dem Behältnisstrom und/oder dem Transportpfad auszuschleusen ist

Es wird daher die Verwendung einer Sensoreinrichtung vorgeschlagen, welche auch komplexere Sensormesswerte und insbesondere in Echtzeit und insbesondere in harter Echtzeit über einen Feldbus und insbesondere einen Ethernet basierten Feldbus an eine übergeordnete Auswertung (bzw. die Steuerungseinrichtung) liefern kann, wobei hierzu bevorzugt eine Kabellösung und insbesondere Ein-Kabel-Lösung vorgesehen ist, oder die Sensoreinrichtung über eine Ein-Kabel-Lösung angebunden ist.

Besonders bevorzugt ist die Sensoreinrichtung dazu geeignet, komplexere Sensormesswerte auszugeben. Insbesondere handelt es sich hierbei um noch unqualifizierte Sensormesswerte (insbesondere sogenannte Rohdaten) wie z. B. digitalisierte analoge Messwerte, die besonders bevorzugt auch von der Zeit abhängig sind, also z.B. Abschnitte von Zeitreihen (insbesondere seit der letzten Übertragung, um so lückenlose Zeitreihen übertragen zu können). Daneben kann es sich auch um Werte von Sensor-Arrays oder Zeilen- oder Matrixsensoren handeln. Daneben können auch aggregierte Mehrfachsensoren vorgesehen sein. Komplexe Daten können aber auch bereits im Sensor dezentral vorverarbeitete Daten sein wie z.B. X-/Y-Positionsangaben oder Lagewinkelinformationen von Behältnissen bzw. die Kombination daraus.

Bevorzugt ist die Sensoreinrichtung dazu geeignet und bestimmt, Daten in Verbindung mit einem Zeitwert auszugeben und/oder die Steuerungseinrichtung ist dazu geeignet und bestimmt, von der Sensoreinrichtung ausgegebenen Daten einen Zeitwert zuzuordnen. Im einfachsten Fall besteht der Zeitwert aus dem Zeitstempel der Datenübertragung.

Bevorzugt sind die von der Sensoreinrichtung ausgegebenen Daten einem bestimmten von der Transporteinrichtung transportierten Behältnis zuordenbar oder werden einem bestimmten Behältnis zugeordnet.

Bevorzugt findet eine Verarbeitung und/oder Auswertung dieser Sensordaten in einem übergeordneten System und insbesondere in der oben genannten Steuerungseinrichtung statt. Auf diese Weise können die Messabläufe erheblich beschleunigt werden. Wie oben erwähnt, ist das System dazu geeignet und ausgelegt, eine zyklische Messung oder Verarbeitung von Daten zu erreichen. Besonders bevorzugt sind die jeweiligen Zeitfenster oder die Reaktionszeiten geringer als 10 ms und bevorzugt geringer als 1 ms. Besonders bevorzugt liegen die Reaktionszeiten in einem Bereich zwischen 10 µs und 10 ms.

Bevorzugt handelt es sich bei dem Feldbus um einen Standardfeldbus, der insbesondere leicht beschaffbar ist. Hierbei ist zu berücksichtigen, dass ein entsprechender defekter Feldbus oder auch ein defektes Kabel den gesamten Kabelstrang unterbricht. Bevorzugt handelt es sich daher bei dem Feldbus um ein Serienelement, welches bevorzugt in großen Stückzahlen beschaffbar ist.

Besonders bevorzugt handelt es sich bei der Aktoreinrichtung um eine Auswurfeinrichtung, welche dazu geeignet und bestimmt ist, einzelne Behältnisse oder auch Gruppen von Behältnissen aus dem Transportpfad auszuschleusen. Dabei ist besonders bevorzugt diese Aktoreinrichtung so ausgelegt, dass auch die Ausschleusung eines einzelnen beispielsweise als fehlerhaft erkannten Behältnisse ermöglicht wird.

Bei der Aktoreinrichtung kann es sich aber auch z.B. um eine geblitzte Beleuchtungseinrichtung handeln und/oder die Sensoreinrichtung kann eine solche Beleuchtungseinrichtung aufweisen, welche die Behältnisse für die Kamerabildaufnahme präzise ausleuchten soll. Solche Beleuchtungen für die Bildverarbeitung weisen als lichterzeugende Bauelemente meist LEDs auf, die mikrosekundengenau synchron zur Bildaufnahme der Kamera angesteuert werden können.

Bei einer weiteren vorteilhaften Ausführungsform weist die Vorrichtung eine Auslöseeinrichtung auf, welche dazu geeignet und bestimmt ist, eine Messung und/oder eine Inspektion eines Behältnisses auszulösen. In diesem Zusammenhang können beispielsweise eine oder mehrere Lichtschranken vorgesehen sein, welche insbesondere dazu geeignet sind, eine Position der Behältnisse auf der Transporteinrichtung zu erfassen. In Reaktion auf diese Position kann eine Messung mittels der Sensoreinrichtung ausgelöst werden.

Besonders bevorzugt weist die Vorrichtung daher eine Positionserfassungseinrichtung auf, welche dazu geeignet und bestimmt ist, die Position der Behältnisse bzw. eines bestimmten Behältnisses entlang des Transportpfads zu erfassen.

Bei einer weiteren vorteilhaften Ausführungsform ist die erste Aktoreinrichtung seitlich neben dem Transportpfad oder unterhalb des Transportpfads angeordnet. Dabei kann die Aktoreinrichtung ein Wirk-Element aufweisen, welches beispielsweise geradlinig bewegbar ist und/oder senkrecht zu dem Transportpfad steht. Bei einer bevorzugten Ausführungsform ist die Aktoreinrichtung elektrisch und/oder pneumatisch und/oder hydraulisch betätigbar. Besonders bevorzugt weist die Aktoreinrichtung ein Kontaktelement auf, welches dazu geeignet und bestimmt ist, die Behältnisse in einem bestimmten Bereich zu kontaktieren, insbesondere um sie aus dem Transportpfad auszuschleusen.

Bevorzugt handelt es sich bei dem Feldbus um einen Ethernet - basierten Feldbus. Insbesondere handelt es sich um einen Ethernet basierten Echtzeitfeldbus. Besonders bevorzugt verwendet dieser Feldbus echtzeitfähige Protokolle und insbesondere standardisierte hartechtzeitfähige Protokolle. Insbesondere verwendet der Feldbus Protokolle, welche Ethernet-Hardware verwenden, wie beispielsweise Profinet-RT/IRT, EtherCAT, Ethernet-IP.

Wird beispielsweise EtherCAT als Busprotokoll eingesetzt, dann stehen eine Vielzahl standardkonformer Busteilnehmer von verschiedenen Herstellern und Lieferanten zur Verfügung, welche einfach adaptiert werden können. Diese erlauben hoch deterministische Datenübertragung bei Zykluszeiten bis hinunter zu 100 µs und Latenzen bis hinunter zu 10 µs, Die möglichen Leitungslängen betragen mehrere 10 m zwischen je zwei Teilnehmern. Darüber hinaus sind umfangreiche Engineering- und Diagnosewerkzeuge verfügbar, was den Einsatz in der Praxis sehr einfach macht.

Bei einer bevorzugten Ausführungsform stehen sowohl die erste Sensoreinrichtung als auch die erste Aktoreinrichtung wenigstens abschnittsweise über die gleiche Kabelverbindung mit der Steuerungseinrichtung in Verbindung. Besonders bevorzugt ist lediglich eine Kabelverbindung vorgesehen, welche die erste Sensoreinrichtung und/oder die erste Aktoreinrichtung mit der Steuerungseinrichtung verbindet.

Bei einer weiteren vorteilhaften Ausführungsform erfolgt über diese Kabelverbindung sowohl eine Datenkommunikation zwischen der Sensoreinrichtung und der Steuerungseinrichtung als auch eine Stromversorgung der Sensoreinrichtung und/oder der Aktoreinrichtung. Besonders bevorzugt handelt es sich hierbei um eine Niedrigspannung bzw. Niedrigstromversorgung.

Besonders bevorzugt sind mehrere Geräte bzw. Einrichtungen mit einem Datenkabel verbunden. Besonders bevorzugt sind hier spezielle Schaltungseinrichtungen wie etwa Switche vorgesehen. Daneben kann auch eine "Daisy Chain" d. h. ein serieller Anschluss vorgesehen sein, bei dem jeweils bevorzugt der Ausgang des vorgelagerten Busteilnehmers mit dem Eingang des nachfolgenden verbunden ist. Wie oben erwähnt verlaufen bevorzugt sowohl eine Spannungsversorgung der Sensoreinrichtung als auch die Sensordaten über eine Kabelverbindung bzw. über das gleiche Kabel. Bei dieser Kabelverbindung kann es sich um ein Hybridkabel handeln, welches getrennte Versorgungs- und Datenleiter verwendet. Daneben kann jedoch auch derselbe Leiter verwendet werden, wie beispielsweise bei dem oben erwähnten PoE.

Durch die Erfindung können auch komplexe Sensor- oder Aktorsysteme mit einer Vielzahl von Sensoren und Aktoren sehr effizient und kostengünstig aufgebaut werden. Speziell bei einer Verkabelung über eine Daisy Chain, bei der jedes Gerät oder jede Einrichtung über eine Eingangs- und eine Ausgangsbuchse bzw. einen Eingangsanschluss und einen Ausgangsanschluss verfügt, ist bevorzugt nur ein Kabelstrang notwendig.

Dies ist insbesondere dann vorteilhaft, wenn mehrere Sensoreinrichtungen und Aktoreinrichtungen vorhanden sind und diese insbesondere hintereinander an einen Transportpfad angeordnet sind. Auf diese Weise kann bei einer Ausdehnung bis zu 100 m und mehr eine hohe Effizienz und niedrige Kosten erreicht werden, im Gegensatz etwa zu einer Lösung, bei der jeder einzelne Sensoreinrichtung parallel und/oder separat verkabelt wird.

Bevorzugt weist wenigstens die Aktoreinrichtung und/oder die Sensoreinrichtung und/oder die Steuerungseinrichtung sowohl eine erste Schnittstelle, etwa eine Eingangsschnittstelle als auch eine zweite Schnittstelle, etwa eine Ausgangsschnittstelle auf. Bevorzugt weisen sämtliche Sensoreinrichtungen und sämtliche Aktoreinrichtungen jeweils eine Eingangs- und eine Ausgangsschnittstelle auf.

Bei freilaufenden Systemen, die insbesondere zyklisch in einem festen Zeitfenster Daten liefern, kann eine Verknüpfung mit Triggersignalen oder anderen für die Auswertung wesentlichen Daten wie etwa einer Bewegungsgeschwindigkeit der zu vermessenden Objekte effizienter erfolgen.

Der echtzeitfähige Ethernet basierte Feldbus erlaubt weiterhin bevorzugt, parallel zur Echtzeitkommunikation auch größere Datenmengen in Nicht-Echtzeit zu übertragen, wie beispielsweise Parameter oder Diagnosedaten.

Besonders bevorzugt steht die Steuerungseinrichtung auch in Kommunikationsverbindung mit einer Antriebseinrichtung, welche die Transporteinrichtung antreibt. Auf diese Weise können beispielsweise Daten über den Transport der Behältnisse, wie insbesondere aber nicht ausschließlich eine Transportgeschwindigkeit eingelesen werden.

Bei einer weiteren vorteilhaften Ausführungsform weist die Vorrichtung eine Auswerteeinrichtung auf, welche die von der Sensoreinrichtung ausgegebenen Daten auswertet. Dabei ist auch diese Auswerteeinrichtung insbesondere von der Sensoreinrichtung und/oder der Aktoreinrichtung beabstandet. Bevorzugt ist diese Auswerteeinrichtung ein Bestandteil der Steuerungseinrichtung und/oder in diese integriert.

Bei einer weiteren bevorzugten Ausführungsform ist die erste Aktoreinrichtung über die erste Sensoreinrichtung der Steuerungseinrichtung in Kommunikationsverbindung und/oder die erste Sensoreinrichtung steht über die erste Aktoreinrichtung mit der Steuerungseinrichtung in Kommunikationsverbindung.

Bei einer weiteren bevorzugten Ausführungsform steht die erste Sensoreinrichtung mit der ersten Aktoreinrichtung über eine direkte Kommunikationsverbindung und insbesondere eine Kabelverbindungen in Verbindung und insbesondere in Kommunikationsverbindung. Besonders bevorzugt sind die erste Sensoreinrichtung, die erste Aktoreinrichtung und die Steuerungseinrichtung über nur eine Kabelverbindung verbunden. Insbesondere sind diese Einrichtungen, wie oben erwähnt, in Serie miteinander verbunden, insbesondere über eine sogenannte Daisy Chain.

Als Daisy Chain (englisch Gänseblümchenkette) bezeichnet man eine Anzahl von Hardwarekomponenten, die in Serie miteinander verbunden sind, meistens in sogenannten Bussystemen in der Automatisierungstechnik.

Dabei ist oftmals eine erste Komponente direkt mit einer Rechenanlage hier der Steuerungseinrichtung verbunden. Die weiteren Komponenten sind jeweils mit ihren Vorgängern verbunden, d. h. es liegt ein Reihenschaltungsprinzip vor. Auf diese Weise entsteht eine Kette.

Besonders bevorzugt wird ein Signal zu und von einer Komponente wie hier der Aktoreinrichtung oder der Sensoreinrichtung nur über deren Vorgänger bis zur Steuerungseinrichtung geliefert.

Besonders bevorzugt sind Prioritäten hinsichtlich der einzelnen Einrichtungen vergebbar. So kann beispielsweise festgelegt werden, dass Informationen nur dann übermittelt werden, wenn die Leitung frei ist, oder dass einige Komponenten einen absoluten Vorrang gegenüber anderen Komponenten haben. Auf diese Weise lassen sich Konflikte und Fehlfunktionen verhindern.

Bei einer weiteren vorteilhaften Ausführungsform weist die erste Sensoreinrichtung eine Bildaufnahmeeinrichtung auf, welche zur Aufnahme zweidimensionaler Bilder geeignet und bestimmt ist. Bevorzugt ist die Sensoreinrichtung zur Ausgabe von Daten geeignet, welche die Ausgabe einer Vielzahl von Werten einzelner Bildpixeln ermöglichen.

Bevorzugt ist die erste Sensoreinrichtung dazu geeignet und bestimmt ortsaufgelöste Bilder der Behältnisse aufzunehmen. Insbesondere handelt es sich hierbei um Farbbilder. Bevorzugt weist daher die erste Sensoreinrichtung ein Array auf, um Bilder aufzunehmen. Es wäre jedoch auch die Verwendung von Zeilensensoren denkbar.

Bei einer bevorzugten Ausführungsform weist die Vorrichtung weiterhin eine Beleuchtungseinrichtung auf, welche dazu geeignet und bestimmt ist, die zu inspizierenden Behältnisse zu beleuchten. Dabei ist sowohl eine Auflichtinspektion möglich, bei der die Behältnisse beleuchtet werden und die Bildaufnahmeeinrichtung aus einer anderen Richtung Bilder aufnimmt. Daneben kann auch eine Durchlichtinspektion vorgesehen sein, bei der die Behältnisse durchleuchtet werden, wie dies beispielsweise bei einer Füllhöhenkontrolle möglich ist.

Bevorzugt ist die Beleuchtungseinrichtung dazu geeignet und bestimmt, diffuse Strahlung auf die zu inspizierenden Behältnisse auszugeben. Bei einer weiteren vorteilhaften Ausführungsform ist die Beleuchtungseinrichtung dazu geeignet und bestimmt, gerichtete Strahlung auf die Behältnisse auszugeben.

Weiterhin ist bevorzugt diese Beleuchtungseinrichtung der Sensoreinrichtung zugeordnet und kann bevorzugt gemeinsam mit der Sensoreinrichtung ausgelöst und/oder getriggert werden,

Bei einer weiteren bevorzugten Ausführungsform werden die Daten wenigstens zweier und bevorzugt von mehreren Sensoreinrichtungen verarbeitet und insbesondere beabstandet von diesen und besonders bevorzugt zentral verarbeitet und/oder ausgewertet. Besonders bevorzugt erfolgt die Bearbeitung und/oder Auswertung dieser Daten auch beabstandet von den Aktoreinrichtungen. Besonders bevorzugt erfolgt die Datenverarbeitung nicht dezentral an der Sensoreinrichtung, sondern zentral an der Steuerungseinrichtung.

Bei einer weiteren vorteilhaften Ausführungsform ist der für das Behältnis charakteristische Wert für eine Eigenschaft des Behältnisses charakteristisch, welche aus einer Gruppe von Eigenschaften ausgewählt ist, welche eine Füllhöhe der in dem Behältnis befindlichen Flüssigkeit, eine Dichtheit eines mit einem Verschluss verschlossen Behältnisses, einen Brixwert, einen Druck eines gasförmigen Mediums innerhalb des Behältnisses, eine Fehlerhaftigkeit eines Verschlusses oder einer Mündung des Behältnisses und dergleichen enthält.

Bevorzugt handelt es sich bei der Transporteinrichtung um eine Transporteinrichtung, welche die Behältnisse geradlinig transportiert. Besonders bevorzugt handelt es sich bei der Transporteinrichtung um eine Transporteinrichtung, welche die Behältnisse einbahnig transportiert. So kann es sich beispielsweise um ein Transportband handeln, auf dem die Behältnisse insbesondere stehend transportiert werden. Es wäre jedoch auch möglich, dass die Behältnisse an ihren Seiten geführt werden oder auch an ihren Verschlüssen oder Mündungen. Weiterhin kann es sich bei den Behältnissen insbesondere um Kunststoffflaschen aber auch um Glasflaschen oder Dosen handeln.

Besonders bevorzugt weist die Vorrichtung wenigstens eine zweite Sensoreinrichtung und/oder wenigstens eine zweite Aktoreinrichtung auf. Besonders bevorzugt ist sowohl eine zweite Sensoreinrichtung als auch eine zweite Aktoreinrichtung vorgesehen. Dabei ist es möglich, dass die erste und die zweite Sensoreinrichtung unterschiedliche Eigenschaften der Behältnisse erfassen. Es wäre jedoch auch denkbar, dass die Sensoreinrichtungen jeweils die gleichen Eigenschaften der Behältnisse erfassen. Daneben können auch mehr als zwei Sensoreinrichtungen und/oder mehr als zwei Aktoreinrichtungen eingesetzt werden. Besonders bevorzugt sind mehrere und besonders bevorzugt alle Sensor- und/oder Aktoreinrichtungen seriell miteinander verbunden und insbesondere jeweils mit echtzeitfähigen Bussen angeschlossen.

Bei einer bevorzugten Ausführungsform sind wenigstens zwei Sensoreinrichtungen vorgesehen, welche aus unterschiedlichen Richtungen Messwerte der transportierten Behältnisse erfassen und/oder aus unterschiedlichen Richtungen Bilder der transportierten Behältnisse aufnehmen.

Besonders bevorzugt sind die mehreren Sensoreinrichtungen hintereinander angeordnet und besonders bevorzugt entlang des Transportpfads der Behältnisse hintereinander angeordnet. Bei einer weiteren bevorzugten Ausführungsform sind auch die mehreren Aktoreinrichtungen hintereinander angeordnet. Besonders bevorzugt sind zunächst alle Sensoreinrichtungen vorgesehen und anschließend alle Aktoreinrichtungen. Es wäre jedoch auch möglich, dass zunächst eine Sensoreinrichtung vorgesehen ist, anschließend eine Aktoreinrichtung, anschließend eine zweite Sensoreinrichtung und anschließend eine zweite Aktoreinrichtung. Besonders bevorzugt stehen jedoch alle Sensoreinrichtungen und/oder alle Aktoreinrichtungen mit der Steuerungseinrichtung in Kommunikationsverbindung.

Besonders bevorzugt wertet die Steuerungseinrichtung sowohl Daten von der ersten als auch von der zweiten Sensoreinrichtung aus.

Die vorliegende Erfindung ist weiterhin auf eine Anlage zum Behandeln von Behältnissen gerichtet. Diese Anlage weist eine erste Behandlungseinrichtung auf, welche die Behältnisse in einer ersten vorgegebenen Weise behandelt. Weiterhin weist die Anlage eine zweite Behandlungseinrichtung auf, welche die Behältnisse in einer zweiten vorgegebenen Weise behandelt. Weiterhin weist die Anlage eine Vorrichtung zum Behandeln und insbesondere Inspizieren von Behältnissen der oben beschriebenen Art auf. Erfindungsgemäß ist die Vorrichtung zum Inspizieren der Behältnisse zwischen der ersten Behandlungseinrichtung und der zweiten Behandlungseinrichtung angeordnet.

Besonders bevorzugt ist die erste Behandlungseinrichtung aus einer Gruppe von Behandlungseinrichtungen ausgewählt, welche Umformungseinrichtungen zum Umformen von Kunststoffvorformlingen zu Kunststoffbehältnissen, Sterilisationseinrichtungen zum Sterilisieren von Behältnissen, Fülleinrichtungen zum Befüllen von Behältnissen, Verschließeinrichtungen zum Verschließen von Behältnissen mit Behältnisverschlüssen, Etikettiereinrichtungen zum Etikettieren von Behältnissen oder Druckeinrichtungen zum Bedrucken von Behältnissen oder dergleichen enthält.

Besonders bevorzugt ist die zweite Behandlungseinrichtung aus einer Gruppe von Behandlungseinrichtungen ausgewählt, welche insbesondere Sterilisationseinrichtungen zum Sterilisieren von Behältnissen, Fülleinrichtungen zum Befüllen von Behältnissen und Verschließeinrichtungen zum Verschließen von Behältnissen mit Verschlüssen und Palettiereinrichtungen und Etikettiereinrichtungen enthält.

Die vorliegende Erfindung ist weiterhin auf ein Verfahren zum Behandeln und insbesondere Inspizieren von Behältnissen und insbesondere Getränkebehältnissen gerichtet. Dabei transportiert eine Transporteinrichtung die Behältnisse entlang eines vorgegebenen Transportpfads und eine erste Sensoreinrichtung erfasst wenigstens einen für die transportierten Behältnisse charakteristischen Wert. Weiterhin wirkt eine erste Aktoreinrichtung auf (wenigstens) ein transportiertes Behältnis ein und schleust dieses insbesondere aus dem Transportpfad aus.

Weiterhin steuert eine Steuerungseinrichtung die erste Aktoreinrichtung unter Berücksichtigung wenigstens eines von der ersten Sensoreinrichtung ausgegebenen Signals und/oder Werts.

Erfindungsgemäß steht die erste Sensoreinrichtung und die erste Aktoreinrichtung mittels eines echtzeitfähigen Feldflusses mit der Steuerungseinrichtung über eine Kabelverbindung in Kommunikationsverbindung und die erste Sensoreinrichtung gibt für die Behältnisse charakteristische Messdaten in Echtzeit aus, wobei auch die Kommunikation zwischen der Sensoreinrichtung und der Steuerungseinrichtung in Echtzeit erfolgt. Bevorzugt erfolgt auch die Kommunikation zwischen der Steuerungseinrichtung und der Aktoreinrichtung in Echtzeit.

Besonders bevorzugt transportiert die Transporteinrichtung die Behältnisse mit einer Transportgeschwindigkeit, die größer ist als 0,1 m/s Besonders bevorzugt transportiert die Transporteinrichtung die Behältnisse mit einer Transportgeschwindigkeit, die kleiner ist als 10m/s Bei einem weiteren bevorzugten Verfahren ist ein Abstand der transportierten Behältnisse größer als 1 cm, bevorzugt größer als 2 cm, bevorzugt größer als 3 cm. Besonders bevorzugt ist der Abstand der transportierten Behältnisse (insbesondere Vorderwand eines ersten Behältnisses zur Rückwand eines zweiten Behältnisses) kleiner als 30 cm, bevorzugt kleiner als 20 cm, bevorzugt kleiner als 15 cm, bevorzugt kleiner als 10 cm und besonders bevorzugt kleiner als 8 cm.

Besonders bevorzugt ist der Abstand der nacheinander transportierten Behältnisse zwischen einem Viertel Behältnisdurchmesser und einem vollen Behältnisdurchmesser.

Besonders bevorzugt handelt es sich bei den Behältnissen um befüllte und besonders bevorzugt um verschlossene Behältnisse. Weiterhin können die Behältnisse Drucke und/oder Etiketten aufweisen.

Bei einem weiteren bevorzugten Verfahren sind mehrere Sensoreinrichtungen und/oder mehrere Aktoreinrichtung vorgesehen und diese stehen wenigstens abschnittsweise über die gleiche Kabelverbindung mit der Steuerungseinrichtung in Verbindung. Besonders bevorzugt kommunizieren mehrere Sensoreinrichtungen und besonders bevorzugt alle Sensoreinrichtungen in Echtzeit mit der Steuerungseinrichtung.

Besonders bevorzugt gibt die Sensoreinrichtung komplexe Daten aus.

Besonders bevorzugt wird das hier beschriebene Verfahren zur Qualitätsüberprüfung und/oder Qualitätssicherung der Behältnisse durchgeführt
Weitere Vorteile und Ausführungsformen ergeben sich aus der beigefügten Zeichnung:
Dabei zeigt:

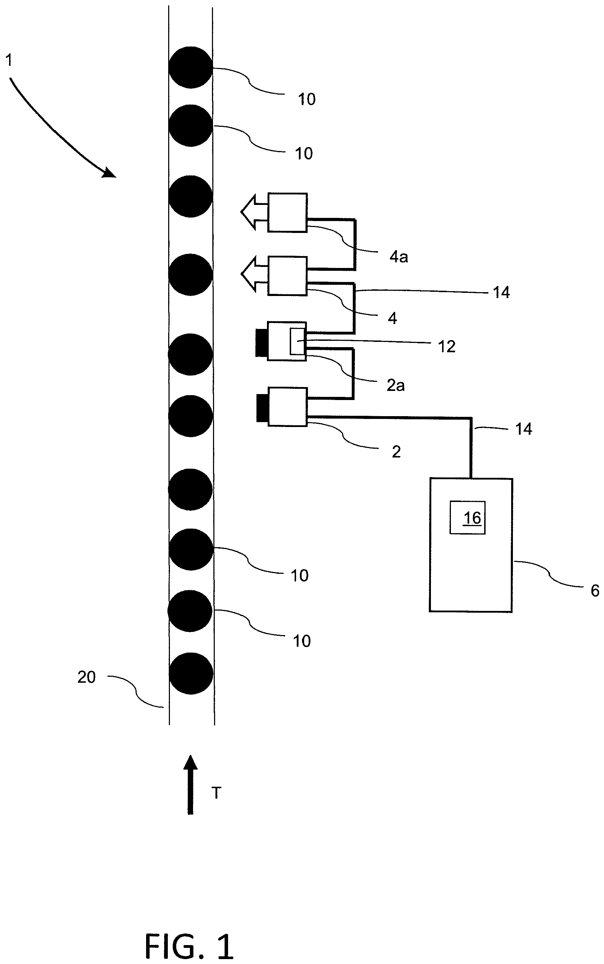

- Fig. 1: eine schematische Darstellung einer erfindungsgemäßen Vorrichtung.

Fig. 1 zeigt eine schematische Darstellung einer erfindungsgemäßen Vorrichtung 1. Diese weist eine Transporteinrichtung 20, beispielsweise ein Transportband 20 auf, welches die Behältnisse 10 entlang eines bevorzugt geradlinigen Transportpfads T transportiert.

Die Bezugszeichen 2 und 2a kennzeichnen zwei Sensoreinrichtungen, welche dazu geeignet und bestimmt sind, Eigenschaften der von der Transporteinrichtung 20 transportierten Behältnisse 10 zu erfassen und insbesondere berührungslos und insbesondere optisch zu erfassen.

Die Bezugszeichen 4 und 4a kennzeichnen zwei Aktoreinrichtungen, die entlang des Transportpfads T nach den Sensoreinrichtungen 2, 2a angeordnet sind und welche insbesondere dazu dienen, die Behältnisse 10 aus dem Transportpfad T auszuschleusen, insbesondere in Reaktion auf ein von wenigstens einer der Sensoreinrichtung 2, 2a ausgegebenes Signal.

Das Bezugszeichen 6 kennzeichnet eine Steuerungseinrichtung der Vorrichtung. Diese Steuerungseinrichtung steuert insbesondere die Aktoreinrichtungen 4, 4a in Reaktion auf von den Sensoreinrichtungen 2, 2a ausgegebene Signale.

Die einzelnen Sensoreinrichtungen 2, 2a und Aktoreinrichtungen 4, 4a und bevorzugt auch die Steuerungseinrichtung 6 sind jeweils mit Echtzeit - Feldbussen 12 ausgestattet, wobei jedoch in Fig. 1 nur ein derartiger Feldbus dargestellt ist.

Daneben sind die Sensoreinrichtungen 2, 2a und Aktoreinrichtungen 4, 4a und bevorzugt auch die Steuerungseinrichtung 6 über eine einzelne Kabelverbindung 14 miteinander verbunden. Diese Kabelverbindung kann sich jedoch auch aus einzelnen Verbindungsstücken zusammensetzen, welche die Sensoreinrichtungen 2, 2a und bevorzugt auch die Aktoreinrichtungen 4, 4a und die Steuerungseinrichtung 6 miteinander verbinden.

Bevorzugt weist die Steuerungseinrichtung 6 eine Auswerteeinrichtung auf, welche insbesondere die von der oder den Sensoreinrichtungen ausgegebenen Daten und/oder Signale auswertet und bevorzugt als Ergebnis dieser Auswertung eine der Aktoreinrichtungen ansteuert, um ein entsprechendes Behältnis 10 aus dem Transportpfad auszuschleusen.

Beispielsweise handelt es sich bei der Sensoreinrichtung 2 um einen Zeilensensor, der als komplexe bevorzugt Daten ein Array von Messwerten liefert, wobei die Messwerte besonders bevorzugt mit einem vertikal angeordneten Sensorarray aufgenommene Absorptionswerte darstellen. Diese Werte werden zyklisch über die Kabelverbindung 14 zur Steuerungseinrichtung 6 übertragen, welche aus den Signalen einen Füllstand eines Produkts in den Behältnissen 10 berechnet. Aufgrund der deterministischen Datenübertragung können diese Füllstandswerte und die davon abgeleiteten OK/NOK-Informationen einzelnen Behältnissen 10 zugeordnet werden.

Die Sensoreinrichtung 2a könnte eine Kameraeinheit sein, die den Sitz der Verschlüsse auf den Behältnissen 10 bestimmt. Diese Einheit könnte als komplexe Daten die Positionen der Verschlüsse relativ zu den Behältnissen 10 sowie deren Winkel zur Horizontalen bestimmen. Diese Daten werden ebenfalls über die Kabelverbindung 14 zur Steuerungseinrichtung 6 übertragen, welche aus den Positions- und Winkeldaten OK/NOK-Informationen ableitet und wiederum den einzelnen Behältnissen 10 zuordnet.

Die Aktoreinrichtung 4 wäre im Beispiel die bevorzugt geblitzte Beleuchtungseinheit, welche der Kameraeinheit 2a zur optimalen Beleuchtung der Behältnisse dient. Über die Kabelverbindung 14 erhält diese die Information zur hoch synchronen Blitzansteuerung.

Die Aktoreinrichtung 4a wäre in diesem Beispiel die stromabwärts angeordnete Ausleiteinheit. Diese erhält, ebenfalls über die Kabelverbindung 14, die Information zur positionsgerechten Ausleitung der NOK (nicht ok) Behältnisse 10. Die Ausleitung selbst kann pneumatisch ausgeführt sein, in diesem Fall würde zum exakt richtigen Zeitpunkt ein Magnetventil zum Aktivieren der Druckluft angesteuert. Andernfalls kann die Ausleitung auch per Servomotor erfolgen, in diesem Fall wird der Ausleitvorgang elektrisch getriggert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Behandeln und insbesondere Inspizieren von Behältnissen (10) und insbesondere Getränkebehältnissen mit einer Transporteinrichtung (20), welche dazu geeignet ist, die Behältnisse (10) entlang eines vorgegebenen Transportpfads (P) zu transportieren, mit einer ersten Sensoreinrichtung (2), welche dazu geeignet und bestimmt ist, wenigstens einen für die transportierten Behältnisse (10) charakteristischen Wert zu erfassen, mit einer ersten Aktoreinrichtung (4), welche entlang des Transportpfads (P) nach der ersten Sensoreinrichtung (2) angeordnet ist und welche dazu geeignet ist, auf ein transportiertes Behältnis (10) einzuwirken und mit einer von der Sensoreinrichtung (2) und der Aktoreinrichtung (4) beabstandeten Steuerungseinrichtung (6), welche dazu geeignet und bestimmt ist, die erste Aktoreinrichtung (4) unter Berücksichtigung wenigstens eines von der ersten Sensoreinrichtung (2) in Abhängigkeit von dem charakteristischen Wert ausgegebenen Signals zu steuern,
**dadurch gekennzeichnet, dass**
die erste Sensoreinrichtung (2) und die erste Aktoreinrichtung (4) mittels eines echtzeitfähigen Feldbusses (12) mit der Steuerungseinrichtung (6) über eine Kabelverbindung (14) in Kommunikationsverbindung steht und die erste Sensoreinrichtung (2) dazu geeignet ist Messdaten in Echtzeit auszugeben und die Kommunikation zwischen der ersten Sensoreinrichtung (2) und der Steuerungseinrichtung (6) und/oder der Steuerungseinrichtung (6) und der ersten Aktoreinrichtung (4) in Echtzeit erfolgt.

2. Vorrichtung (1) nach Anspruch 1,
**dadurch gekennzeichnet, dass**
der Feldbus ein Ethernet basierter Feldbus ist.

3. Vorrichtung (1) nach wenigstens einem der vorangegangenen Ansprüche,
**dadurch gekennzeichnet, dass**
sowohl die erste Sensoreinrichtung (2) als auch die erste Aktoreinrichtung (4) wenigstens abschnittsweise über die gleiche Kabelverbindung mit der Steuerungseinrichtung (6) in Verbindung stehen.

4. Vorrichtung (1) nach dem vorangegangenen Anspruch,
**dadurch gekennzeichnet, dass**
über diese Kabelverbindung sowohl eine Datenkommunikation zwischen der Sensoreinrichtung (2) und der Steuerungseinrichtung als auch eine Stromversorgung der Sensoreinrichtung und/oder der Aktoreinrichtung erfolgen.

5. Vorrichtung (1) nach wenigstens einem der vorangegangenen Ansprüche,
**dadurch gekennzeichnet, dass**
die Vorrichtung (1) eine Auswerteeinrichtung (16) aufweist, welche die von der Sensoreinrichtung (2) ausgegebenen Daten auswertet, wobei die Auswerteeinrichtung insbesondere von der Sensoreinrichtung und/oder der Aktoreinrichtung beabstandet ist.

6. Vorrichtung (1) nach wenigstens einem der vorangegangenen Ansprüche,
**dadurch gekennzeichnet, dass**
die erste Aktoreinrichtung (4) über die erste Sensoreinrichtung (2) mit der Steuerungseinrichtung (6) in Kommunikationsverbindung steht und/oder die erste Sensoreinrichtung (2) über die erste Aktoreinrichtung (4) mit der Steuerungseinrichtung (6) in Kommunikationsverbindung steht.

7. Vorrichtung (1) nach wenigstens einem der vorangegangenen Ansprüche,
**dadurch gekennzeichnet, dass**
die erste Sensoreinrichtung (2) mit der ersten Aktoreinrichtung (4) über eine direkte Kommunikationsverbindung und insbesondere eine Kabelverbindung in Verbindung steht.

8. Vorrichtung (1) nach wenigstens einem der vorangegangenen Ansprüche,
**dadurch gekennzeichnet, dass**
die erste Sensoreinrichtung eine Bildaufnahmeeinrichtung aufweist, welche zur Aufnahme zweidimensionaler Bilder geeignet und bestimmt ist.

9. Vorrichtung (1) nach wenigstens einem der vorangegangenen Ansprüche,
**dadurch gekennzeichnet, dass**
der für das Behältnis charakteristische Wert für eine Eigenschaft des Behältnisses charakteristisch ist, welche aus einer Gruppe von Eigenschaften ausgewählt ist, welche Füllhöhe des Behältnisses mit einem Füllprodukt, eine Dichtheit eines mit einem Verschluss verschlossenen Behältnisses, einen Brix Wert, einen Druck eines gasförmigen Mediums innerhalb des Behältnisses und dergleichen ausgewählt ist.

10. Vorrichtung (1) nach wenigstens einem der vorangegangenen Ansprüche,
**dadurch gekennzeichnet, dass**
die Vorrichtung (1) wenigstens eine zweite Sensoreinrichtung (2a) und/oder wenigstens eine zweite Aktoreinrichtung (4a) aufweist.

11. Verfahren zum Behandeln und insbesondere Inspizieren von Behältnissen (10) und insbesondere von Getränkebehältnissen wobei eine Transporteinrichtung (20) die Behältnisse (10) entlang eines vorgegebenen Transportpfads (P) transportiert und eine erste Sensoreinrichtung (2), wenigstens einen für die transportierten Behältnisse (10) charakteristischen Wert erfasst, und eine erste Aktoreinrichtung (4) auf ein transportiertes Behältnis (10) einwirkt und wobei eine Steuerungseinrichtung (6), die erste Aktoreinrichtung (4) unter Berücksichtigung wenigstens eines von der ersten Sensoreinrichtung (2) ausgegebenen Signals steuert,
**dadurch gekennzeichnet, dass**
die erste Sensoreinrichtung und die erste Aktoreinrichtung mittels wenigstens eines echtzeitfähigen Feldbusses mit der Steuerungseinrichtung über eine Kabelverbindung (14) in Kommunikationsverbindung steht und die erste Sensoreinrichtung (2) für die Behältnisse charakteristische Messdaten in Echtzeit ausgibt, wobei die Kommunikation zwischen der Sensoreinrichtung und der Steuerungseinrichtung in Echtzeit erfolgt.

12. Verfahren nach dem vorangegangenen Anspruch,
**dadurch gekennzeichnet, dass**
mehrere Sensoreinrichtungen und/oder mehrere Aktoreinrichtungen vorgesehen sind und diese wenigstens abschnittsweise über die gleiche Kabelverbindung mit der Steuerungseinrichtung (6) in Verbindung stehen.

13. Verfahren nach wenigstens einem der vorangegangenen Ansprüche,
**dadurch gekennzeichnet, dass**
die Sensoreinrichtung komplexe Daten ausgibt.

14. Verfahren nach wenigstens einem der vorangegangenen Ansprüche,
**dadurch gekennzeichnet, dass**
das Verfahren zur Qualitätsüberprüfung und/oder Qualitätssicherung der Behältnisse durchgeführt wird.
